Europäisches Patentamt

European Patent Office

Office européen des brevets

(19)

(11) Publication number: **0 261 749**
**A1**

# EUROPEAN PATENT APPLICATION

(21) Application number: 87201869.2

(22) Date of filing: 04.11.82

(51) Int. Cl.⁴: **C03B 5/16** , C03B 5/027 ,
C03B 5/18

The title of the invention has been amended (Guidelines for Examination in the EPO, A-III, 7.3).

(30) Priority: 04.11.81 US 317995
04.11.81 US 317996
04.11.81 US 317994

(43) Date of publication of application:
**30.03.88 Bulletin 88/13**

(60) Publication number of the earlier application in accordance with Art.76 EPC: **0 078 715**

(84) Designated Contracting States:
**BE DE FR GB IT NL**

(71) Applicant: **Corning Glass Works**
**Sullivan Park FR-212**
**Corning New York 14831(US)**

(72) Inventor: **Palmquist, Ronald William**
**3228 Liversay Road**
**Horseheads New York, 14835(US)**
Inventor: **Carley, Harold James**
**10, Orchard Drive**
**Corning New York, 14830(US)**

(74) Representative: **Boon, Graham Anthony et al**
**Elkington and Fife High Holborn House 52/54**
**High Holborn**
**London, WC1V 6SH(GB)**

(54) **Method for protecting a device from oxygen within a glass-melting furnace, and a device protected thereby.**

(57) A method and apparatus are described of protecting or shielding a device (130), such as an electrode, from oxygen within a glass-melting furnace containing a supply of molten glass, the device being maintained at elevated temperatures above an oxidizing temperature thereof. This is achieved by coating the device along a selected length thereof with an annular glass coating (140) comprising a plurality of vitreous materials having different viscosity characteristics, from a relatively hard glass to a relatively soft glass. The materials are located about the device in axially located annular bands (137A-137E) from the respective relatively hard to soft glasses, beginning near a portion of the device exposed to relatively higher temperatures for avoiding thermal shock and spalling of the vitreous materials away from the device.

FIG. 1

## Method of protecting or shielding a device from oxygen within a glass-melting furnace

This invention relates to glass-melting furnaces. More particularly, the invention relates to a method of protecting or shielding a device from oxygen with such a furnace, and to a device which is so protected or shielded. In an embodiment of the invention the said devices are electrodes or other devices inserted at selected locations through the batch of a vertical glass-melting furnace.

In an electric glass-melting furnace, electrodes are coupled to a source of electric power and placed in contact with a bath of molten glass. Electrical energy flows between the electrodes and dissipates energy in the form of Joule heating in the molten glass for melting a blanket of glass-forming batch materials deposited on and floating on top of the bath. Such electrodes may be inserted through openings in wall portions of the furnace, as in conventional furnaces, or may be directly placed in contact with the molten glass from above or through the layer of batch floating thereon, as in the case of a cold crown electric melter. Further details of such a furnace are to be found in EP-A-0078715 to which attention is directed.

In many glass-melting furnaces molybdenum (moly) is used as the preferred electrode material. However, because moly has a relatively low oxidation temperature of about 500°C, complex protection devices are required to shield the electrodes from deterioration by contact with oxygen trapped in the glass-forming batch material and/or other corrosive agents therein. Such devices include conventional water-cooled stainless steel sleeves or specially fabricated glass contact refractory sleeves which surround the electrode. These devices are expensive and somewhat short lived. For example, water cooling tends to dissipate energy intended for glass-melting purposes and has a deleterious effect on melting efficiency and glass quality. Protection devices tend to be heavy and cumbersome and are not easily adjusted or replaced, thereby diminishing their versatility. Glass quality may also be affected by contamination of the glass by materials forming the protective devices, and these materials eventually corrode and become mixed with the glass in the furnace.

A preferred embodiment of the aspect of the present invention uses a relatively inexpensive and long-lived system for directly immersing moly rods into a bath of thermoplastic material. The moly rods are protected from oxidation without complicated peripheral apparatus. The system requires no cooling, and thus, energy utilization is enhanced. Further, the moly rods can be supported in a relatively simple holder thereby facilitating adjustment and replacement.

It should be realized that the present invention is also applicable to other devices which may be directly immersed in a bath of molten glass as, for example, stirring devices, oxygen sensors and thermocouples. Also other oxidizable materials are contemplated, for example tungsten, rhenium and columbium, as long as the oxidizable portions thereof are protected in the manner set forth herein. However, in order to simplify the disclosure herein, reference will mainly be made to the advantages of the present invention relative to moly electrodes. It is intended, however, that such other alternatives are to be considered part of the invention.

The present invention provides method of protecting or shielding a device from oxygen within a glass-melting furnace containing a supply of molten glass, the device being maintained at elevated temperatures above an oxidizing temperature thereof, comprising coating the device along a selected length thereof with an annular glass coating characterised in that the glass coating comprises a plurality of vitreous materials having different viscosity characteristics, from a relatively hard glass to a relatively soft glass, said materials being located about the device in axially located annular bands from the respective relatively hard to soft glasses, beginning near a portion of the device exposed to relatively higher temperatures for avoiding thermal shock and spalling of the vitreous materials away from the device.

The invention further provides device for immersion into a supply of a glass in a molten state, said device being capable of operating in excess of an oxidation temperature thereof, comprising an oxidizable rod of a selected length having a tip end and extending axially therefrom to at least a support portion thereof, said rod being oxidizable in the presence of oxygen and at temperatures necessary to melt the glass, said rod being located, in use, in said furnace and partially submersible in the molten glass from the tip end to at least near the support portion thereof, and a relatively thin coating of vitreous material adhered to a selected portion of the rod between the tip end and the support portion, said vitreous coating being relatively highly viscous at temperatures at least near said oxidation temperature of said rod and remaining adhered to said rod, and said rod being shielded from oxygen by said coating where the temperature of said rod is in excess of the oxidation temperature thereof, characterised in that the coating comprises a plurality of annular formations of vitreous materials surrounding the device continuously along the selected length, said vitreous materials being formed of substances having viscosity characteristics successively ranging from a relatively high viscosity near the tip end to a relatively lower viscosity remote from said tip end.

In the accompanying drawings:

Figure 1 is a schematic illustration of an embodiment of an electrode constructed in accordance with the present invention;

Figure 2 shows a modification wherein the electrode has an axial opening into which a purge fluid is introduced.

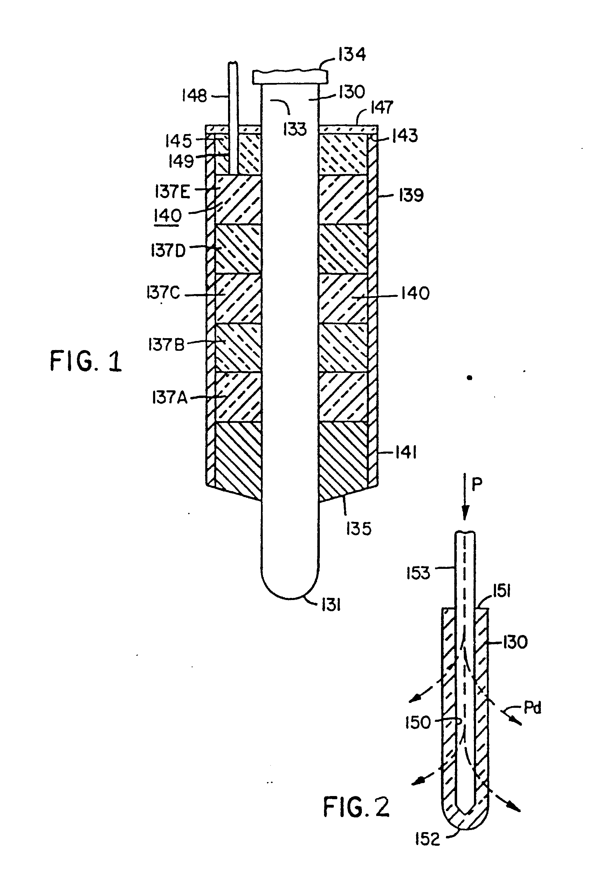

In Figure 1 there is illustrated an embodiment of the present invention wherein electrode 130 is pre-shielded with a protective glass coating 140. The electrode 130 has a moly collar 135 located near the tip end 131. The collar 135 may be threaded, shrink fitted or bolted onto the electrode 130. A plurality of different glass-forming materials, in the form of unconsolidated cullet or solid glass annular rings or annular cylinders 137A-137E, may be located axially of the electrode 130 along a selected length to grade the protective coating 140 thereof. If glass cullet is utilized for the rings 137A-137E, an alumina tube 139 of sufficient length may be joined at a lower end 141 to the collar 135 for containing the materials therein. A fused silica material such as sold under the trademark VYCOR could be used for tube 139. At an upper end 143 of the tube 139, an annular refractory cap or plug 145 may be sleeved over the rod 130 and located within the tube 139 to close a space containing the protective coating 140 therein. The plug 145 may be a packing material such as FIBERFRAX® Rope. Additionally, a readily available extrudable silicone sealant 147 such as Dow Corning RTV 732 could be placed over refractory cap 145. A purge line 148 may be fitted through opening 149 in plug 145 and seal 147 for the introduction of a purge gas P interior the tube 139. A purge gas P protects the moly electrode during startup before the cullet rings 137A-137E melt. Thereafter, the melted material protects electrode from oxygen contamination.

The electrode 130 illustrated in Figure 1 might be suitably clamped to the support collar 134 and slowly lowered through the batch 120 and into the molten glass 112. At such time, the various layers of protective materials 137A-137E would become melted or softened and adhere to the electrode 130. It should be realized that the protective layer 140 experiences a temperature gradient when placed in service. The temperature of the electrode 130 decreases as one moves axially therealong from the tip 131 to the point 133 near where it is supported by collar 134. Different glass compositions may be used for the rings 137A-137E forming protective layer 140, each having a different softening and annealing point. Each will be susceptible to some viscous flow at various temperatures. By tailoring the compositions of rings 137A-137E from relatively hard glasses, for the lowest protective layer 137A near the tip 131, to relatively soft glasses at the upper end of the protective layer 133, each will exhibit the proper characteristics at its anticipated operating temperature. By grading the glasses as hereinabove set forth, there is less likelihood of thermally shocking the protective layer 140 over the temperature gradient therealong. Further, because the batch layer 120 acts as an insulator from the high heat generated within the bath of molten glass 112, the protective coating 140 will remain relatively intact even though it is softened.

The following Example is thought to set forth a suitable embodiment of a graded protective coating 140 beginning with the lower ring 137A or relatively softer glass and progressing to the uppermost ring 137E of relatively harder glass as follows:

137A - Borosilicate (Corning Code 7740 (8" long, 200mm)

137B - Alkali Barium Borosilicate (Corning Code 7052) (7" long; 178mm)

137C - Borosilicate having a high boric oxide content as set forth in U.S. Patent 2,106,744

137D-137E - Borosilicate glass as in 137C mixed with increasing amounts of anhydrous boric oxide from 20 to 40% respectively (7" long each, 178mm)

Rings 137A-137E - 100 mesh cullet

Tube 139 - VYCOR brand tubing

Total length of coating - approximately 36" - (915mm).

The present invention also contemplates the use of a borosilicate glass tube 139 such as Corning Code 7052 having an expansion comparable with the moly.

The tube 139 would be sealed directly to the electrode 130 without the cullet fill 137A-137E. The electrode 130 should be preheated in order to prevent thermal shock.

An advantage of the arrangement illustrated in Figure 1 is that electrode 130 may be prefabricated for quick insertion into the furnace 110 without any other preparation. The tube 139 not only contains therewithin the protective layer 140 (if in granular form), but also provides for some protection of the protective layer 140 at least until it is consolidated during operation of the furnace 110. The moly collar 135 would normally be located below the level of the free surface of the bath, and thus is protected from oxidation by its immersion in the molten glass 112.

In Figure 2 there is illustrated a modification in which the electrode 130 may have an axial bore 150 drilled or formed therein. The bore 150 extends generally lengthwise thereof from an open upper end 151 to near tip 152 thereof. A purge line 153 may be located in the open end 151 and a purge fluid P introduced therein. At elevated temperatures, hydrogen or other gases inert with respect to moly will diffuse therethrough as shown by dotted arrow Pd. This embodiment is additionally protected from oxidation without undue energy and material costs.

## Claims

1. A method of protecting or shielding a device (130) from oxygen within a glass-melting furnace containing a supply of molten glass, the device (130) being maintained at elevated temperatures above an oxidizing temperature thereof, comprising coating the device (130) along a selected length thereof with an annular glass coating 140, characterised in that the glass coating comprises a plurality of vitreous materials having different viscosity characteristics, from a relatively hard glass to a relatively soft glass, said materials being located about the device in axially located annular bands (137A-137E) from the respective relatively hard to soft glasses, beginning near a portion of the device exposed to relatively higher temperatures for avoiding thermal shock and spalling of the vitreous materials away from the device.

2. A method as claimed in claim 1, wherein the vitreous material is initially in granular form and the method further comprises the step of containing the granular vitreous material in position about the device until said vitreous material becomes softened and viscously adhered to the device.

3. A method as claimed in claim 2, further comprising the step of sealing the contained granular material against ambient atmosphere.

4. A method as claimed in claim 2 or 3, further comprising the step of introducing a purge gas through the granular material adjacent the exterior of the device.

5. A method as claimed in any preceding claim, further comprising the step of diffusing a purge gas (P) through the device from the interior to the exterior thereof.

6. A device for immersion into a supply of a glass in a molten stage, said device being capable of operating in excess of an oxidation temperature thereof, comprising: an oxidizable rod (130) of a selected length having a tip end (131) and extending axially therefrom to at least a support portion (134) thereof, said rod (130) being oxidizable in the presence of oxygen and at temperatures necessary to melt the glass, said rod (130) being located, in use, in said furnace and partially submersible in the molten glass from the tip end (131) to at least near the support portion thereof (134), and a relatively thin coating (140) of vitreous material adhered to a selected portion of the rod between the tip end (131) and the support portion (134), said vitreous coating (140) being relatively highly viscous at temperatures at least near said oxidation temperature of said rod (130) and remaining adhered to said rod, and said rod (130) being shielded from oxygen by said coating (140) where the temperature of said rod (130) is in excess of the oxidation temperature thereof, characterised in that the coating (140) comprises a plurality of annular formations (137A-137E) of vitreous materials surrounding the device continuously along the selected length, said vitreous materials being formed of substances having viscosity characteristics successively ranging from a relatively high viscosity near the tip end (131) to a relatively lower viscosity remote from said tip end (131).

7. A device as claimed in claim 6, further comprising a lower support means (135) secured to the device near the tip end (131), said support means (135) engaging the high viscosity annular formation (137A) for supporting the coating against viscous flow thereof in the direction of the tip end (131).

8. A device as claimed in claim 7, further comprising an annular containment tube (139) surrounding the device coating along the selected length thereof said tube (139) being secured at one end to the lower support means (135) for preventing flow of the coating away from the device.

9. A device as claimed in claim 8, wherein the annular tube (139) is formed of fused silica or alumina.

10. A device as claimed in any one of claims 6 to 9, further comprising means (153) for introducing a purge gas (P) into the same for shielding the device from deleterious ambience.

FIG. 1

134
148
130
133
147
145
143
149
137E
139
140
137D
137C
140
137B
137A
141
135
131

P

153
151
130
150
Pd
152

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 983 309  (FAULKNER) <br> * Whole document * <br> --- | 1,6 | C 03 B    5/16 <br> C 03 B    5/027 <br> C 03 B    5/18 |
| A | GB-A-  960 032 <br> (SIEMENS-SCHUCKERTWERKE) <br> * Whole document * <br> --- | 1,6 | |
| A | DE-C-  889 337  (TANBERG) <br> * Whole document * <br> --- | 1,6 | |
| A | US-A-3 884 669  (FRIEND) <br> * Whole document * <br> ----- | 1,6 | |

TECHNICAL FIELDS
SEARCHED (Int. Cl.4)

C 03 B    5/00

The present search report has been drawn up for all claims

| Place of search | Date of completion of the search | Examiner |
|---|---|---|
| THE HAGUE | 01-12-1987 | VAN DEN BOSSCHE W.L. |

EPO FORM 1503 03.82 (P0401)